Europäisches Patentamt

European Patent Office

Office européen des brevets

(11) Publication number: **0 047 136**
**B2**

(12) NEW EUROPEAN PATENT SPECIFICATION

(45) Date of publication of the new patent
specification: **17.11.88**

(21) Application number: **81303917.9**

(22) Date of filing: **27.08.81**

(51) Int. Cl.⁴: **G 01 F 1/00, G 01 F 9/00**

(54) **Fuel consumption measuring system for an internal combustion engine powered vehicle.**

(30) Priority: **28.08.80 GB 8027868**

(43) Date of publication of application:
**10.03.82 Bulletin 82/10**

(45) Publication of the grant of the patent:
**31.10.84 Bulletin 84/44**

(45) Mention of the opposition decision:
**17.11.88 Bulletin 88/46**

(84) Designated Contracting States:
**DE FR GB IT**

(56) References cited:
**DE-A-1 188 309**
**FR-A-2 269 707**
**GB-A-1 433 875**

(73) Proprietor: **Soltau, John Peter**
**5 Lightwoods Close Copt Heath**
**Knowle Solihull West Midlands (GB)**

(72) Inventor: **Soltau, John Peter**
**5 Lightwoods Close Copt Heath**
**Knowle Solihull West Midlands (GB)**

(74) Representative: **Prutton, Roger et al**
**MARKS & CLERK Alpha Tower Suffolk Street**
**Queensway**
**Birmingham B1 1TT (GB)**

## Description

The invention relates to fuel consumption measuring systems for vehicles powered by an internal combustion engine.

The accurate measurement of fuel consumption of the engine of a road vehicle which incorporates a fuel system where excess fuel is drawn from the fuel tank and subsequently returned to the tank is made very difficult by such excess fuel flow. Although accurate measurements can be made in these circumstances, measurement systems proposed in the past have been complicated suitable for use only in special test vehicles, rather than as standard equipment in production vehicles.

It is already known from FR-A1-2 269 707 to use an auxiliary tank arrangement for fuel consumption measurement in such a special test vehicle. This auxiliary tank was divided into two compartments, a valve being provided to determine from which compartment fuel was drawn by the engine and another valve which determines to which compartment unused fuel is returned. When no measurement is required a pump controlled by a float in one compartment supplies fuel from a main storage tank to one compartment and the valves both connect to that one compartment. When measurement is required the valves are changed over and the pump is stopped. The change in level of the fuel in the other compartment after a test distance has been driven is then noted.

Such a system involves a complicated auxiliary tank construction quite separate from the main fuel storage tank and all the valves and their control gear are too expensive to make the system proposed suitable for use in production vehicles. Moreover, since the auxiliary tank is remote from the main storage tank problems can arise with the recirculating fuel being heated up.

It is also known from U.K. Patent Specification No. 1 433 875, to provide a return fuel storage tank having an outlet controlled by a float valve in the return fuel storage tank. Again problems can arise with returned fuel heating up in the relatively low mass loop defined by the fuel system and the return fuel storage tank.

It is accordingly an object of the present invention to provide a simpler measuring system suitable for use in production vehicles and in which overheating of recirculating fuel is avoided.

The invention provides a fuel consumption measuring system for use in an engine fuel system in which the total fuel drawn from fuel tank means for feeding the engine fuel system is partially returned thereto as excess fuel; said fuel consumption measuring system comprising the fuel tank means which includes a main storage tank and a return fuel storage tank to which the excess fuel is directed the total fuel flow drawn from the fuel tank means being equal to the fuel flow drawn from the excess fuel returned to the fuel tank means plus fuel flow drawn from the main fuel tank, level sensitive valve means sensitive to the level of fuel in the return flow fuel tank and acting to continuously vary the ratio of the quantity of fuel drawn from the main storage tank to the quantity of fuel drawn from the return fuel storage tank whereby the level of fuel in the return fuel storage tank is maintained constant and a measuring device measuring the quantity of fuel drawn from the main tank only, characterised in that said return fuel storage tank is mounted in the main storage tank.

In this way, since the quantity of fuel in the return fuel storage tank is kept constant, the consumption can be measured continuously as the quantity drawn from the main storage tank. Excess fuel returned to the return fuel storage tank is kept cool by heat exchange with the fuel in the main storage tank.

The control of the level in the return fuel storage tank may be effected either by using a proportioning valve with inputs from both tanks, or by arranging for a pump to keep the return fuel storage tank topped up from the main storage tank.

In the accompanying drawings:-

Figure 1 is a view, partly in section, of a main fuel tank with one example of a measuring system in accordance with the invention installed therein;

Figure 2 is an enlarged sectional view of valve means forming part of the system; and

Figure 3 is a view like Figure 1 showing another example of the invention.

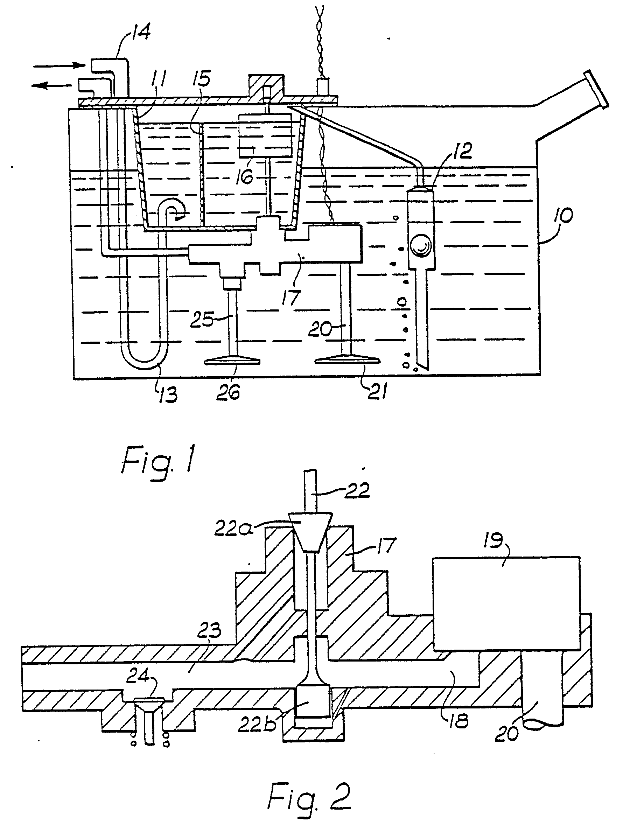

As shown in Figure 1, the main fuel tank 10 has a return fuel storage tank 11 mounted in it. The tank 11 provides a completely isolated air tight enclosure, although a venting valve 12 is arranged to interconnect the upper extremity of the tank 11 to the lower part of tank 10, flow of air and vapour from the tank 11 to the tank 10, being permitted by the valve 12, in the event of the ambient or fuel temperature rising for any reason or to get rid of any fuel-entrained air and vapour.

The tank 11 is connected by a pipe 13 extending through the tank 10 to a connector 14 whereby it is connected to the fuel return line of the petrol injection or diesel injection system of the vehicle in which the tank is installed. The return line receives excess fuel drawn from the tank(s) by the pump of the fuel system, but spilled by the pressure regulating valve or circulation circuit of that system. A baffle 15 is a mounted in the tank 11 to separate the part of the tank 11 which the pipe 13 enters from a part thereof in which a float 16 is mounted. The float 16 is connected to a proportioning valve 17, shown in more detail in Figure 2, which controls the ratio in which fuel is drawn from the two tanks to maintain the level of fuel in the tank 11 constant. The baffle 15 prevents the float 16 from being perturbed by return fuel flow into the tank 11.

The valve 17 has an inlet 18 connected by a fuel flow metering device 19 and a pipe 20 with a strainer 21 thereon to the main fuel tank. The float 16 is connected to a vertically movable valve element 22 including an upper valve portion 22a and a lower valve portion 22*b*. The upper portion 22*a* controls flow from the tank 11 into an outlet gallery 23 of the valve and the portion 22*b* controls flow from the inlet 18 to the gallery 23. As the float rises portion 22*a* lifts from its seat and permits progressively more flow from the tank 11, and the portion 22*b* progressively impedes flow from the inlet 18.

The valve 17 also has an emergency valve element 24 which is spring-loaded shut and controls a second inlet pipe 25 having a second strainer 26 thereon. The valve 24 opens if the device 19 or the proportioning valve fail, so that the engine can continue to run.

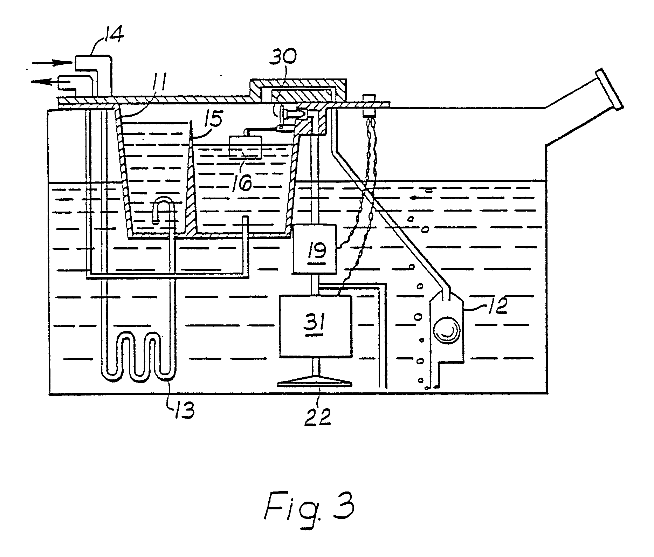

Turning now to Figure 3, in the embodiment shown therein the output from the tank assembly is taken only from the return fuel storage tank. The float 16 operates a valve 30 which controls the output from a pump 31 drawing fuel via filter 22 and delivering it to the flow measuring device 19 from the main tank. The valve 30 controls admission of fuel to the return fuel storage tank, so as to keep the level in the latter by making up fuel consumed by the engine.

Positioning the tank 11 inside the main tank 10 ensures that the returned fuel is cooled by the main stock of fuel and also makes for simple design of the float/valve arrangement.

## Claims

1. A fuel consumption measuring system for use in an engine fuel system in which the total fuel drawn from fuel tank means for feeding the engine fuel system is partially returned thereto as excess fuel; said fuel consumption measuring system comprising the fuel tank means which includes a main storage tank (10) and a return fuel storage tank (11) to which the excess fuel is directed, the total fuel flow drawn from the fuel tank means being equal to the fuel flow drawn from the excess fuel returned to the fuel tank means plus fuel flow drawn from the main fuel tank, level sensitive valve means (16, 17 or 16, 30) sensitive to the level of fuel in the return flow fuel tank and acting to continuously vary the ratio of the quantity of fuel drawn from the main storage tank to the quantity of fuel drawn from the return fuel storage tank whereby the level of fuel in the return fuel storage tank is maintained constant and a measuring device (19) measuring the quantity of fuel drawn from the main tank only characterised in that said return fuel storage tank (11) is mounted in the main storage tank (11).

2. A fuel consumption measuring system as claimed in claim 1, in which said means sensitive to the level of fuel in the return fuel storage tank (11) comprises a proportioning valve (17) having one input connection from the return fuel storage tank (11) controlled by one valve element (22a) and another input from the main storage tank (10) controlled by another valve element (22b) and incorporating said measuring device (19).

3. A fuel consumption measuring system as claimed in claim 1, in which said means sensitive to the level of fuel in the return fuel storage tank (11) comprises a pump (31) operating to transfer fuel from the main storage tank (10) to the return fuel storage tank (11) via the flow measuring device (19).

## Patentansprüche

1. Kraftstoffverbrauchs-Meßsystem fur die Verwendung in einem Motorkraftstoffsystem, bei dem der gesamte, von den Kraftstofftankmitteln abgezogene Kraftstoff zum Versorgen des Motorkraftstoffsystems teilweise als uberschüssigen Kraftstoff zu diesem zuruckgebracht wird, wobei dieses Kraftstoffverbrauchs-Meßsystem die Kraftstofftankmittel umfaßt, welche einen Hauptspeichertank (10) und einen Rückführkraftstoffspeichertank (11) umfassen, zu dem der übermäßige Kraftstoff gerichtet wird, wobei der von den Kraftstofftankmitteln abgezogene gesamte Kraftstofffluß gleich dem Kraftstofffluß ist, der dem zu den Kraftstofftankmitteln zurückgebrachten überschüssigen Kraftstoff entspricht plus dem Kraftstofffluß, welcher vom Hauptspeichertank abgezogen wird, sowie eine niveausensitive Ventilanordnung (16, 17 oder 16, 30), welche für das Kraftstoffniveau im Rückführkraftstoffspeichertank (11) sensitiv ist und dazu dient, kontinuierlich das Verhältnis der vom Hauptspeichertank (10) abgezogenen Kraftstoffmenge zu der Menge, die vom Rückführkraftstoffspeichertank (11) abgezogen wird, zu variieren, wodurch das Kraftstoffniveau im Rückführkraftstoffspeichertank (11) konstant gehalten wird, und eine Meßvorrichtung (19), die die Kraftstoffmenge, die vom Haupttank alleine abgezogen wird, mißt, dadurch gekennzeichnet, daß der Rückführkraftstoffspeichertank (11) im Hauptspeichertank (10) angebracht ist.

2. Kraftstoffverbrauchs-Meßsystem nach Anspruch 1, bei dem die für das Niveau des Kraftstoffs im Rückführkraftstoffspeichertank (11) sensitiven Mittel ein Proportionierventil (17) umfassen, welches einen Einlaßanschluß vom Rückführkraftstoffspeichertank (11), gesteuert durch ein Ventilelement (22a), und einen anderen Einlaß vom Hauptspeichertank (11) hat, welcher durch ein anderes Ventilelement (22b) gesteuert ist, und daß das Proportionierventil (17) die Meßvorrichtung (19) beinhaltet.

3. Kraftstoffverbrauchs-Meßsytem nach Anspruch 1, bei dem die für das Niveau des Kraftstoffs im Rückführkraftstoffspeichertank (11) sensitiven Mittel eine Pumpe (31) umfassen, die dahingehend tätig ist, Brennstoff vom Hauptspeichertank (10) über die Strömungsmeßvorrichtung (19) zum Rückführkraftstoffspeichertank (11) zu überführen.

## Revendications

1. Système de mesure de consommation de carburant, destiné à un circuit de carburant d'un moteur, dans lequel la quantité totale de carburant retiré d'un dispositif formant réservoir de carburant et servant à alimenter le circuit de carburant du moteur, est partiellement renvoyée à ce dispositif sous forme de carburant en excès, le système de mesure de consommation comprenant le dispositif formant réservoir de carburant, lequel comporte un réservoir principal (10) et un réservoir (11) de carburant renvoyé, vers lequel le carburant en excès est dirigé, le débit total de carburant retiré du dispositif formant réservoir de carburant étant égal au débit de carburant retiré du carburant en excès renvoyé dans le dispositif formant réservoir augmenté du débit de carburant retiré du réservoir principal, un dispositif de soupape (16, 17 ou 16, 30) sensible au niveau du carburant dans le réservoir de carburant renvoyé et agissant de manière à varier de façon continue le rapport de la quantité de carburant retiré du réservoir principal à la quantité de carburant retiré du réservoir de carburant renvoyé, d'une manière telle que le niveau du carburant dans le réservoir de carburant renvoyé reste constant, ainsi qu'un dispositif de mesure (19) mesurant uniquement la quantité de carburant retir du réservoir principal, caractérisé en ce que le réservoir (11) de carburant renvoyé est monté dans le réservoir principal (10).

2. Système de mesure de consommation de carburant selon la revendication 1, dans lequel le dispositif sensible au niveau de carburant dans le réservoir de carburant renvoyé (11) comporte une soupape doseuse (17) ayant une connexion d'entrée reliée au réservoir de carburant renvoyé (11) et commandée par un élément d'obturation (22a) et une autre entrée reliée au réservoir principal de carburant (10) et commandée par un autre élément d'obturation (22b) et comprenant le dispositif de mesure (19).

3. Système de mesure de consommation de carburant selon la revendication 1, dans lequel le dispositif sensible au niveau de carburant dans le réservoir de carburant renvoyé (11) comporte une pompe (31) dont le rôle est de transférer le carburant du réservoir principal (10) au réservoir de carburant renvoyé (11) à travers le dispositif (19) de mesure de débit.

Fig. 1

Fig. 2

*Fig. 3*